# EUROPEAN PATENT APPLICATION

(11) **EP 4 715 495 A1**
(43) Date of publication of application: **25.03.2026**
(21) Application number: 24201423.1
(22) Date of filing: 19.09.2024
(51) Int. Cl.: G05B 17/02, G05B 23/02, F04D 15/00

(54) **METHOD FOR SELECTING A REPLACEMENT COMPONENT FOR A POWERTRAIN**

(71) Applicant: ABB SCHWEIZ AG, 5400 Baden (CH)
(72) Inventor: RÖNNBERG, Kristian, 731 91 Köping (SE); KAKOSIMOS, Panagiotis, 723 58 Västerås (SE); PINTO, Cajetan, 28027 Madrid (ES); LUNDBERG, Simon, 721 30 Västerås (SE); GULATI, Ankush, 248730 Singapore (SG); MOTOVILOVA, Olga, 8047 Zurich (CH); KUEH, Aaron, 822168 Singapore (SG); DECORMIS-LEON, Paolo Andres, 8046 Zurich (CH)
(74) Representative: Kransell & Wennborg KB

(57) **Abstract**

A method for selecting a replacement component (103) for a powertrain (100) comprising at least one electric motor (101) configured to drive a fluid moving device (102) in a fluid control system (110), the method comprising:
receiving data relating to the powertrain, comprising at least nameplate data and powertrain operational data relating to operational characteristics of the powertrain within the fluid control system;
creating a digital twin model of the powertrain;
identifying system requirements of the fluid control system;
obtaining technical information (t1, t2, ..., tn) relating to a plurality of potential replacement components from a database (150);
digitally evaluating the use of each one of the potential replacement components within the powertrain by using the digital twin model in combination with the technical information and the system requirements;
selecting the replacement component from the plurality of potential replacement components based on the digital evaluation.

## Description

### TECHNICAL FIELD

The technology disclosed herein relates generally to powertrains comprising electrical motors in fluid control systems. In particular, it relates to means and methods for selecting a replacement component for such a powertrain.

### BACKGROUND

Electric motors are often used in powertrains of fluid control systems, such as in pump and fan applications. An example of such an application is a cooling and ventilation system of a building, a factory, or another type of facility. Such a cooling and ventilation system may be large and complex and comprise a large number of electric motors, driving several fluid moving devices such as pumps, fans, blowers, compressors, and similar. In view of the large number of active components in large cooling and ventilation systems, significant energy savings may be available by replacing components of the powertrains that are inefficient or not properly dimensioned for the application by more suitable components.

### SUMMARY

A primary objective of embodiments herein is to provide in at least some aspects improved methods and means for selecting at least one replacement component for a powertrain in a fluid control system. A specific objective is to provide means and methods for facilitating the selection of a replacement component for a powertrain within a large and complex fluid control system, such as in a cooling and ventilation system of a large facility. In particular, it is an objective to provide such means and methods that may lead to significant energy savings within the fluid control system.

According to a first aspect, at least the primary objective is accomplished by a computer-implemented method for selecting at least one replacement component for a powertrain, wherein the powertrain comprises a plurality of components including at least one electric motor configured to drive a fluid moving device, such as a fan, a blower, a compressor, or a pump, in a fluid control system. The method comprises:
receiving data relating to the powertrain, comprising at least nameplate data of the at least one electric motor, and powertrain operational data relating to operational characteristics of the powertrain within the fluid control system;
creating a digital twin model of the powertrain based on at least the received data relating to the powertrain;
identifying system requirements of the fluid control system;
obtaining technical information relating to a plurality of potential replacement components for the powertrain from a database;
digitally evaluating the use of each one of the potential replacement components within the powertrain by using the digital twin model in combination with the obtained technical information and the identified system requirements;
selecting the at least one replacement component from the plurality of potential replacement components based on the digital evaluation.

The proposed method uses a digital twin of the powertrain as used in the fluid control system to simulate and evaluate the use of several replacement components within the powertrain, and based thereon select a suitable replacement component. In this way, a large amount of potential replacement components may be quickly evaluated without physical testing, also for complex systems comprising a lot of components. This enables replacement of over-dimensioned or inefficiently operated electric motors in large and complex fluid control systems, leading to significant energy savings at a low cost. In particular, advantages in terms of energy savings may be achieved in cooling systems of large facilities, such as large buildings, storages, server halls, chemical plants, or factories.

The proposed method is particularly useful for identifying and replacing, or complementing, at least one electric motor of the powertrain such that a more efficient powertrain may be achieved.

The replacement component may herein be understood as a component which is to replace or complement an existing component of the powertrain. Hence, the replacement component may be an additional component which is retrofitted to the powertrain. The replacement component may, e.g., comprise a variable speed drive (VSD) which is retrofitted to the powertrain, wherein an existing electric motor of the powertrain is reconfigured to be controlled by the VSD. The replacement component may further comprise a VSD-driven electric motor, i.e., an electric motor including a VSD which is to replace the existing electric motor.

The nameplate data may preferably include nameplate data of the fluid moving device, in addition to the nameplate data of the at least one electric motor. This enables creation of a more accurate digital twin model.

Optionally, the powertrain operational data comprises one or more of: load data of the at least one electric motor, average load on the at least one electric motor, speed data of the at least one electric motor, average speed of the at least one electric motor, long term peak output power of the at least one electric motor, short term peak output power of the at least one electric motor, and/or operating time of the at least one electric motor. Generally, for a direct online electric motor, load data and operating time may be sufficient, while as for an electric motor driven by a variable speed drive, speed data and operating time may be sufficient.

Optionally, the identifying of the system requirements comprises analysing the powertrain operational data. This may be a sufficiently accurate way to identify the system requirements.

Optionally, the method further comprises:
receiving sensor data relating to one or more of pressure, flow rate, density, and/or viscosity of fluid within the fluid control system,
wherein the identifying of the system requirements is based on the sensor data.

Sensor data may enable a more accurate evaluation of the potential replacement components within the powertrain of the fluid control system.

Optionally, the method further comprises:
receiving information relating to flow control mechanisms within the fluid flow system,
wherein the digital evaluating of the use of each one of the potential replacement components is based on at least the received information relating to the flow control mechanisms.

The flow control mechanisms have a direct impact on the flow rate within the fluid control system. Furthermore, the flow control mechanism help understand quality-based information, such as if the flow rate within the fluid control system is expected to be constant or varying. By having access to this information, potential efficiency gains that can be achieved by changing flow control mechanisms can be evaluated, such as gains resulting from varying rotational speed of the electric motor instead of using throttling to regulate flow.

Optionally, the digital evaluating of the use of each one of the potential replacement components comprises, for each potential replacement component:
estimating at least one powertrain characteristic associated with using the potential replacement component within the powertrain,
assessing whether the estimated at least one powertrain characteristic fulfils at least one preset selection criterion,
wherein the selecting of the at least one replacement component is based on the assessed at least one selection criterion.

In this way, a plurality of criteria relating to e.g. energy efficiency and/or operational limits and requirements may be defined and used in the evaluation, allowing selection of a suitable replacement component.

Optionally, the digital evaluating of the use of each one of the potential replacement components comprises, for each potential replacement component:
estimating an energy efficiency associated with using the potential replacement component within the powertrain,
wherein the selecting of the at least one replacement component is based on the estimated energy efficiency.

Optionally, the digital evaluating of the use of each one of the potential replacement components comprises, for each potential replacement component:
estimating a reliability associated with using the potential replacement component within the powertrain,
wherein the selecting of the at least one replacement component is based on the estimated reliability.

Energy efficiency and reliability are both important powertrain characteristics that may be used to evaluate the use of the potential replacement component within the powertrain.

Optionally, the method further comprises:
identifying a component of the powertrain to be replaced or complemented by the at least one replacement component.

In some examples, a plurality of components to be replaced or complemented may be identified, such as if the powertrain comprises more than one electric motor.

Optionally, the component to be replaced or complemented is an electric motor configured to run at a fixed speed. This may be a direct online (DOL) electric motor. Significant energy savings may be achieved by complementing such a motor with a variable speed drive (VSD), i.e., by retrofitting the VSD and change control mechanisms of the existing electric motor, or by replacing it by a VSD-driven electric motor.

Optionally, the identifying of the component to be replaced or complemented comprises:
selecting a first electric motor of the powertrain;
comparing an average output power of the first electric motor to a nominal output power of the first electric motor to obtain a first comparison result;
if the first comparison result fulfils a preset first criterion, identifying the first electric motor as the component to be replaced or complemented.

The process may be repeated for all electric motors of the powertrain. This allows identifying the electric motor of the powertrain that is associated with most power losses, and selecting it as the component to be replaced or complemented.

Optionally, the plurality of potential replacement components comprises at least one variable speed drive (VSD). By complementing an existing DOL motor driving a fluid moving device by a VSD, significant energy savings may usually be achieved.

Optionally, the receiving of the powertrain operational data comprises obtaining measurement data over a time period representative for the fluid control system. In this way it can be ensured that relevant data are used in the evaluation.

According to a second aspect, an electronic control unit comprising processing circuitry configured to perform the method of the first aspect is provided.

According to a third aspect, a computer program comprising computer code which, when run on processing circuitry of a control unit, causes the control unit to perform the method of the first aspect, is provided.

According to a fourth aspect, a computer program product comprising a computer program of the third aspect, and a computer readable storage medium on which the computer program is stored, is provided.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a powertrain according to embodiments;
Fig. 2 is a flowchart illustrating methods according to embodiments;
Fig. 3 is a flowchart illustrating methods according to embodiments;
Fig. 4 is a flowchart illustrating methods according to embodiments,
Fig. 5 is a schematic diagram showing functional units of a control unit according to an embodiment;
Fig. 6 is a schematic diagram showing functional modules of a control unit according to an embodiment; and
Fig. 7 shows one example of a computer program product comprising computer readable means according to an embodiment.

The drawings are schematic and not drawn to scale.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

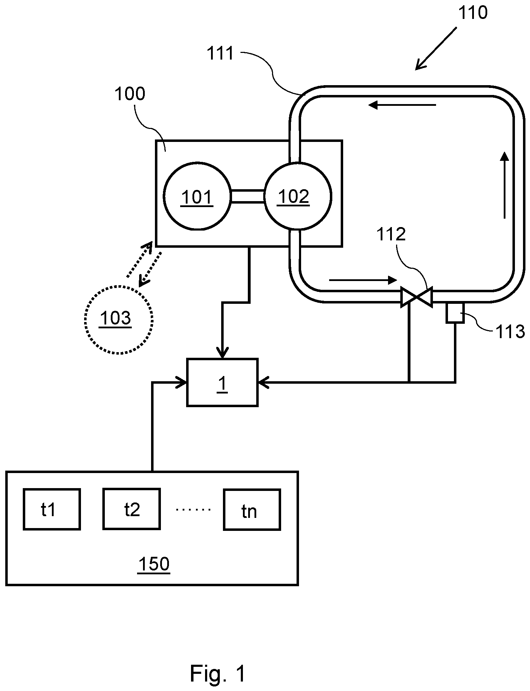

**Fig. 1** schematically illustrates a fluid control system 110 in which a fluid moving device 102, such as a fan, a blower, a pump, a compressor, or similar, is driven by an electric motor 101 of a powertrain 100. The fluid control system 110 may, by way of example, be a ventilation system and/or a cooling system, a fluid processing system, or another type of system in which a fluid is circulated or transferred from one location to another by means of one or more fluid moving devices. Although a single powertrain 100 is illustrated in Fig. 1, the fluid control system 110 may comprise several similar powertrains. Likewise, although a single electric motor 101 and a single fluid moving device are illustrated within the powertrain 100, the powertrain may comprise two or more electric motors, and/or two or more fluid moving devices. For example, a single electric motor may be configured to drive several fluid moving devices, or several electric motors may be provided for driving a single fluid moving device.

The fluid moving device 102 is configured to move a fluid within piping 111 of the fluid control system 110, schematically illustrated by arrows Fig. 1. The piping 111 may form a closed loop for circulating fluid as illustrated in Fig. 1, or it may be an open circuit for transferring fluid from one location to another location. The piping 111 may comprise a single circuit, or it may comprise multiple circuits. At least one sensor 113 may be provided within the fluid control system 110, such as one or more sensors configured to measure pressure, flow rate, density, and/or viscosity of the fluid.

The electric motor 101 maybe a direct online (DOL) electric motor, i.e., an electric motor configured to run at a fixed rotational speed. In such cases, the fluid flow within the fluid control system 110 is regulated by pressure and/or flow control in the fluid control system rather than by electric motor control. The fluid control system 110 may hence comprise at least one valve 112 enabling control of pressure and/or flow within the fluid control system 110, such as by throttling. The at least one valve 112 may, e.g., comprise an adjustable throttle valve. Significant energy savings may be available by finding a suitable replacement component 103 which is to replace or complement the electric motor 101, such as a variable-speed drive (VSD) to complement the existing electric motor, or another electric motor driven by a VSD, replacing the existing electric motor. When the powertrain comprises several motors, one or more of those may be replaced and/or complemented by suitable replacement components. Hence, instead of varying pressure and/or flow within the fluid control system 110 by throttling, as with a DOL motor, the throttle valve may remain fully open and electric motor speed be used to control fluid flow within the fluid control system 110.

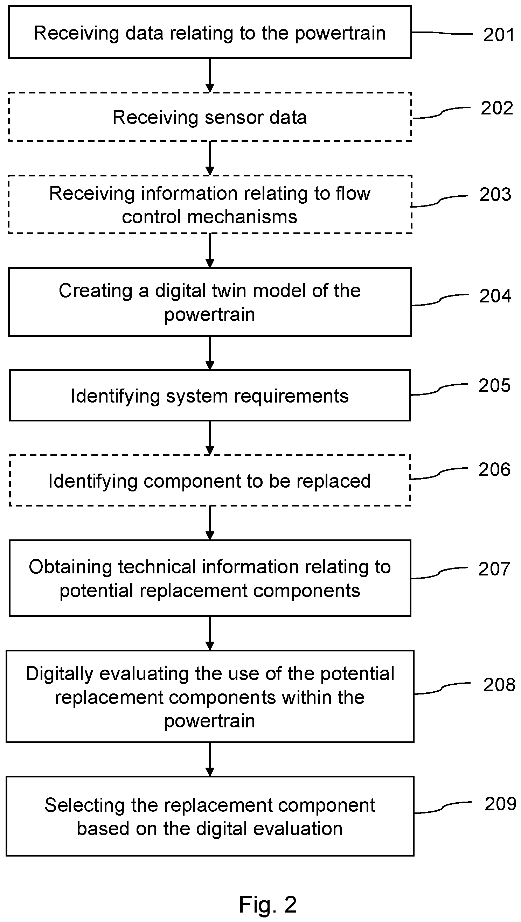

**Fig. 2** illustrates a method according to the present disclosure, in which at least one replacement component 103 for a powertrain 100, such as the powertrain 100 illustrated in Fig. 1, is selected. The method may be performed in an electronic control unit 1 which is communicatively connected to the powertrain 100 and which may also receive data from, e.g., various sensors within the fluid control system 110, such as the at least one sensor 113, and/or from one or more flow control devices within the fluid control system 110, such as from the at least one valve 112. The electronic control unit 1 is further communicatively connected to a database 150 comprising technical information t1, t2, ..., tn relating to n potential replacement components, including the at least one replacement component 103.

The method comprises the following actions:
**Action 201:** Receiving data relating to the powertrain 100, comprising at least nameplate data of the at least one electric motor 101, and powertrain operational data relating to operational characteristics of the powertrain 100 within the fluid control system 110. The nameplate data of the at least one electric motor 101 may comprise e.g. rated power of the electric motor 101, i.e., nominal output power of the electric motor 101. The nameplate data may further comprise nominal speed, nominal current, voltage, shaft height, and/or efficiency class of the at least one electric motor 101. Preferably, the data relating to the powertrain also comprises nameplate data of the fluid moving device 102. The nameplate data of the fluid moving device 102 depends on the type of fluid moving device. For example, for a pump, the nameplate data may comprise data relating to nominal and/or minimum and/or maximum values of head, flow rate, power, efficiency, voltage, etc. The powertrain operational data may, e.g., comprise one or more of: load data of the at least one electric motor 101, average load on the at least one electric motor 101, speed data of the at least one electric motor 101, average speed of the at least one electric motor 101, long term peak output power of the at least one electric motor 101, short term peak output power of the at least one electric motor 101, and/or operating time of the at least one electric motor 101, such as annual operating time. For a DOL motor, the powertrain operational data may include at least average load and/or a loading histogram, and annual operating time. For a VSD-driven motor, the powertrain operational data may include at least average speed and/or a speed histogram, and annual operating time.

The powertrain operational data may further comprise data relating to the fluid moving device 102, such as flow rate data, operating time, etc., when such data are available. The powertrain operational data may relate to the operation of the powertrain during a determined time period of interest, such as a time period representative of typical operation of the powertrain 100 within the fluid control system 110. For example, the powertrain operational data may relate to the operation of the powertrain 100 during the past year, the past month, the past week, or similar. The powertrain operational data may comprise measurement data collected over the time period representative for the fluid control system. For a pump or fan application, the powertrain operational data may include at least a flow rate histogram and an annual operating time of the fluid moving device 102.

**Action 202 (optional):** Receiving sensor data relating to one or more of pressure, flow rate, density, and/or viscosity of fluid within the fluid control system 110. Such sensor data may be received directly or indirectly from the at least one sensor 113 of the fluid control system 110. Alternatively, or additionally, data relating to e.g. the type of fluid within the fluid control system 110 may be received from another source, such that viscosity and/or density may be determined based thereon.

**Action 203 (optional):** Receiving information relating to flow control mechanisms within the fluid control system 110. This information may, e.g., include operating characteristics of the at least one valve 112 within the fluid control system 110. Information relating to flow control mechanisms may also be included in the nameplate data of the fluid moving device 102, such as data relating to dampers of a fan or guide vanes of a compressor. The information relating to flow control mechanisms may also include information on bypass control and similar within the fluid control system 110.

**Action 204:** Creating a digital twin model of the powertrain 100 based on at least the received data relating to the powertrain 100, i.e., the nameplate data and the powertrain operational data. The digital twin model is a digital representation of the powertrain 100 as used in the fluid control system 110. It may be used to simulate and evaluate replacement of components within the powertrain 100.

**Action 205:** Identifying system requirements of the fluid control system 110. The system requirements may be determined in a variety of different ways, depending on, e.g., which data are available. For example, if no information relating to flow control mechanisms is available, and if no sensor data from the fluid control system 110 is available, the system requirements may be determined solely from the received data relating to the powertrain 100. However, when information relating to flow control mechanisms and/or sensor data from the fluid control system 110 is/are available, a more accurate determination of the system requirements may be achieved. In some examples, the system requirements may be identified solely based on the powertrain operational data relating to the operation of the at least one electric motor 101. The identifying of the system requirements may hence comprise analysing the powertrain operational data, such as the electric motor operational data. When information relating to the fluid moving device 102 and/or flow control mechanisms and/or sensor data is/are available, more detailed system requirements may be possible to identify. For a pump application, system requirements may include values relating to pump head, pump capacity, pump power, etc.

**Action 206 (optional):** Identifying a component of the powertrain 100 to be replaced or complemented by the at least one replacement component 103.

**Action 207:** Obtaining technical information t1, t2, ..., tn relating to a plurality of potential replacement components for the powertrain from a database 150. The technical information t1, t2, ..., tn may be information corresponding to nameplate data of the plurality of potential replacement components, and/or additional technical information made available in the database 150. The plurality of potential replacement components may preferably comprise at least one variable speed drive, VSD. It may be a VSD in combination with an electric motor, and/or it may be a VSD which is to complement an existing electric motor of the powertrain 100.

**Action 208:** Digitally evaluating the use of each one of the potential replacement components within the powertrain 100 by using the digital twin model in combination with the obtained technical information and the identified system requirements. In this action, the obtained technical information relating to potential replacement components, and the identified system requirements, are used as input to the digital twin model. Hence, the use of several different potential replacement components may be simulated to determine e.g. energy efficiency and prevention-failure (P-F) curves associated with each potential replacement component. If the action 203 of receiving information relating to the flow control mechanisms has been carried out, the digital evaluation may further be based on at least the received information relating to the flow control mechanisms.

**Action 209:** Selecting the at least one replacement component from the plurality of potential replacement components based on the digital evaluation.

The system requirements identified in the action 205 may be used to narrow down the amount of potential replacement components that are to be evaluated in the action 208. For example, only potential replacement components that are expected to be able to comply with the system requirements may be selected for evaluation. When the component to be replaced is an electric motor, only potential replacement components that fulfil some predefined requirements with respect to, e.g., nominal output power, shaft height, starting current, starting torque, peak power, etc., may be selected for evaluation. In other cases, all potential replacement components within the database may be evaluated, and selection criteria may be used after the evaluation to select the most suitable replacement component.

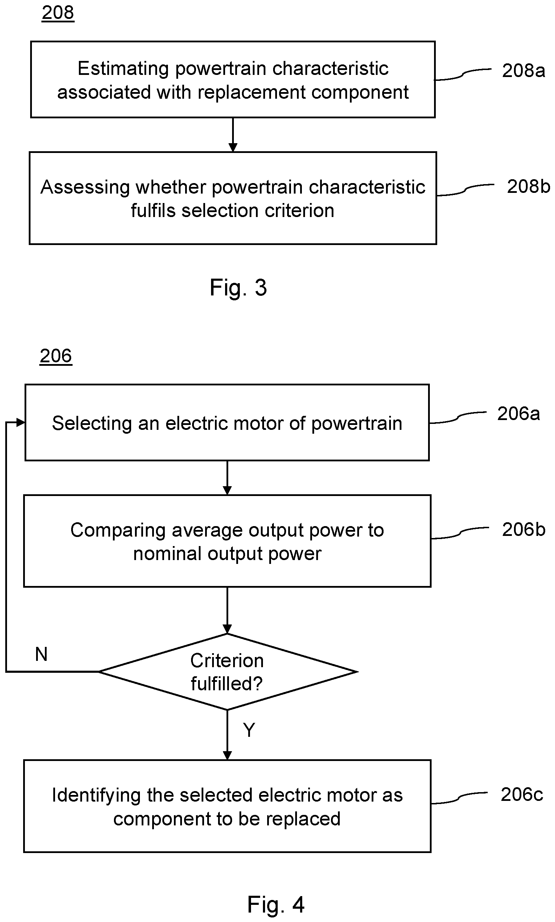

As illustrated in **Fig. 3****,** the action 208 of digitally evaluating the use of each one of the potential replacement components may comprise, for each potential replacement component:
**Action 208a:** Estimating at least one powertrain characteristic associated with using the potential replacement component within the powertrain 100.
**Action 208b:** Assessing whether the estimated at least one powertrain characteristic fulfils at least one preset selection criterion.

The action 209 of selecting the at least one replacement component may be based on the assessed at least one selection criterion. In other words, the evaluated potential replacement component may be selected as the replacement component 103 only when the at least one selection criterion is fulfilled. Multiple selection criteria may be defined. As discussed above, selection criteria relating to nominal output power, shaft height, starting current, starting torque, etc., may be defined. Moreover, as further discussed below, selection criteria relating to simulated energy efficiency and reliability associated with the potential replacement component may be defined.

The action 208 of digitally evaluating of the use of each one of the potential replacement components may additionally or alternatively comprise, for each potential replacement component, estimating an energy efficiency associated with using the potential replacement component within the powertrain 100. The action 209 of selecting the at least one replacement component may in those cases be based on the estimated energy efficiencies. For example, the replacement component found to be most energy efficient in the evaluation may be selected. Hence, the at least one selection criterion may include a criterion relating to the estimated energy efficiency. The energy efficiency may, e.g., be determined in terms of a power factor of the potential replacement component when used within the powertrain 100. For example, load data of the at least one electric motor 101, included within the powertrain operational data received in the action 201, may be used to determine a power factor of the potential replacement component by using the digital twin model.

The action 208 of digitally evaluating of the use of each one of the potential replacement components may additionally or alternatively comprise, for each potential replacement component, simulating a P-F curve associated with using the potential replacement component within the powertrain 100. The P-F curve is used to determine reliability and performance of an equipment over time and may be used to identify when preventive maintenance should be carried out. In the present method, P-F curves associated with using a particular replacement component to drive the existing at least one fluid moving device 102 may be simulated within the digital evaluation. The at least one selection criterion may include a criterion relating to the P-F curve, such as an expected amount of time between detecting a potential failure (P) and the actual functional failure (F), sometimes referred to as the P-F interval. For example, the at least one selection criterion may define a minimum P-F interval.

The action 206 of identifying a component of the powertrain 100 to be replaced or complemented by the at least one replacement component 103 may be omitted if it was already defined prior to initiating the method of selecting a replacement component which component is to be replaced. When the powertrain comprises several electric motors, the action 206 may comprise identifying a plurality of components to be replaced or complemented, such as several electric motors, or it may comprise identifying the electric motor that will result in the largest energy gains if replaced or complemented. The action 206 of identifying the component to be replaced or complemented may, as illustrated in **Fig. 4****,** comprise the following actions:
**Action 206a:** Selecting a first electric motor 101 of the powertrain 100.
**Action 206b:** Comparing an average output power of the first electric motor 101 to a nominal output power of the first electric motor 101 to obtain a first comparison result. The average operating power and the nominal output power are comprised within the powertrain operational data and the nameplate data, respectively, as received in the action 201.
**Action 206c:** If the first comparison result fulfils a preset first criterion, identifying the first electric motor 101 as the component to be replaced or complemented. The preset first criterion may be set based on an efficiency profile of an electric motor. Power conversion efficiency of electric motors is usually relatively stable down to 50% of nominal output power and drops relatively fast when the load is less than 50% of the nominal output power. The preset first criterion may therefore preferably be considered fulfilled when the average output power of the first electric motor 101 is less than 50% of the nominal output power as listed in the nameplate data, hence indicating that the electric motor 101 is operated in a non-optimal power range, with reduced efficiency as a result.

The actions 206a-206c may be repeated for all electric motors of the powertrain. One or more of the electric motors may be selected to be replaced or complemented.

### Example

Selection of a replacement component for a powertrain 110 according to a first example will now be described. According to the example, an electric motor 101 to be replaced is first selected based on the nameplate data and the operational data of the electric motor 101 in the fluid control system 110. The operational data includes output power measurements for a selected time period. From the data relating to the output power, a time-averaged output power is determined and compared to a nominal output power of the electric motor 101, as determined from the nameplate data. Depending on the difference, it may be considered to select a replacement motor having a smaller nominal output power and/or a smaller shaft height. For example, if the time-averaged output power is less than 50% of the nominal output power, it may be considered to replace the electric motor 101 by a replacement motor having a smaller nominal output power and/or a smaller shaft height. User input may be used to determine whether downsizing in terms of shaft height is allowed. If downsizing of the shaft height is allowed, a suitable replacement component may be selected from a subset of potential replacement components having a desired, smaller, shaft height, and that also fulfil selection criteria relating to, e.g. nominal output power. If downsizing in terms of shaft height is not allowed, a suitable replacement component may instead be selected from another subset of potential replacement components having the same shaft height as the current electric motor 101 and that fulfil the selection criteria relating to nominal output power, etc.

If the time-averaged output power is 50% of the nominal output power or more, the electric motor 101 may be replaced with a motor having the same or larger nominal output power and the same shaft height as the current electric motor 101.

The selection criteria may define that the replacement motor should have a nominal output power larger than an average measured or estimated input power of the fluid moving device 102, and larger than a long-term maximum output power of the existing electric motor 101, as determined from the powertrain operational data. For example, the selection criteria may define that the replacement motor should have a nominal power of at least 1.2 times the average measured or estimated input power of the fluid moving device 102.

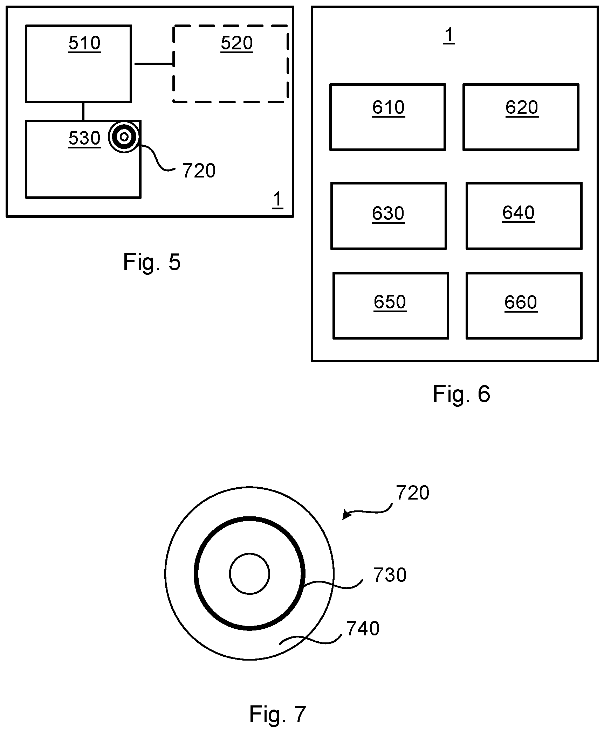

**Fig. 5** schematically illustrates, in terms of number of functional units, the components of an electronic control unit 1 according to an embodiment. Processing circuitry 510 is provided using any combination of one or more of a suitable central processing unit (CPU), multiprocessor, microcontroller, digital signal processor (DSP), etc., capable of executing software instructions stored in a computer program product 720 (as in Fig. 7), e.g., in the form of a storage medium 530. The processing circuitry 510 may further be provided as at least one application specific integrated circuit (ASIC), or field programmable gate array (FPGA).

Particularly, the processing circuitry 510 is configured to cause the control unit 1 to perform a set of operations, or actions, as disclosed above. For example, the storage medium 530 may store the set of operations, and the processing circuitry 510 may be configured to retrieve the set of operations from the storage medium 530 to cause the control unit 1 to perform the set of operations. The set of operations may be provided as a set of executable instructions. The processing circuitry 510 is thereby arranged to execute methods as herein disclosed.

The storage medium 530 may also comprise persistent storage, which, for example, can be any single one or combination of magnetic memory, optical memory, solid state memory or even remotely mounted memory.

The control unit 1 may further comprise a communications interface 520 for communications with other entities, functions, nodes, and devices, over suitable interfaces. As such, the communications interface 520 may comprise one or more transmitters and receivers, comprising analogue and digital components.

The processing circuitry 510 controls the general operation of the control unit 1, e.g., by sending data and control signals to the communications interface 520 and the storage medium 530, by receiving data and reports from the communications interface 520, and by retrieving data and instructions from the storage medium 530. Other components, as well as the related functionality, of the control unit 1 are omitted in order not to obscure the concepts presented herein.

**Fig. 6** schematically illustrates, in terms of a number of functional modules, the components of a control unit 1 according to an embodiment. The control unit 1 of Fig. 6 comprises a number of functional modules:
- a receiving module 610 configured to receive data relating to the powertrain, comprising at least nameplate data of the at least one electric motor 101, and preferably nameplate data of the fluid moving device 102, and powertrain operational data relating to operational characteristics of the powertrain 100 within the fluid control system 110;
- a creation module 620 configured to create a digital twin model of the powertrain 100 based on at least the received data relating to the powertrain 100;
- an identification module 630 configured to identify system requirements of the fluid control system 110;
- an obtaining module 640 configured to obtain technical information t1, t2, ..., tn relating to a plurality of potential replacement components for the powertrain from a database 150;
- an evaluation module 650 configured to digitally evaluate the use of each one of the potential replacement components within the powertrain 100 by using the digital twin model in combination with the obtained technical information and the identified system requirements; and
- a selection module 660 configured to select the at least one replacement component 103 from the plurality of potential replacement components based on the digital evaluation.

The control unit 1 may further comprise a number of optional modules (not shown) configured to perform the actions described above with reference to Figs. 2-4. In general terms, each functional module 610-660 may be implemented in hardware or in software. Preferably, one or more or all functional modules 610-660 may be implemented by the processing circuitry 510, possibly in cooperation with the communications interface 520 and the storage medium 530. The processing circuitry 510 may thus be arranged to from the storage medium 530 fetch instructions as provided by a functional module 610-630 and to execute these instructions, thereby performing any actions of the control unit 1 as disclosed herein.

**Fig. 7** shows one example of a computer program product 720 comprising computer readable means 740. On this computer readable means 740, a computer program 730 can be stored, which computer program 730 can cause the processing circuitry 510 and thereto operatively coupled entities and devices, such as the communications interface 520 and the storage medium 530, to execute methods according to embodiments described herein. The computer program 730 and/or computer program product 720 may thus provide means for performing any actions of the control unit 1 as herein disclosed.

In the example of Fig. 7, the computer program product 720 is illustrated as an optical disc, such as a CD (compact disc) or a DVD (digital versatile disc) or a Blu-Ray disc. The computer program product 1200 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 730 is here schematically shown as a track on the depicted optical disk, the computer program 730 can be stored in any way which is suitable for the computer program product 720.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A computer-implemented method for selecting at least one replacement component (103) for a powertrain (100), wherein the powertrain comprises a plurality of components including at least one electric motor (101) configured to drive a fluid moving device (102) in a fluid control system (110), the method comprising:
receiving (201) data relating to the powertrain, comprising at least nameplate data of the at least one electric motor, and powertrain operational data relating to operational characteristics of the powertrain within the fluid control system;
creating (204) a digital twin model of the powertrain based on at least the received data relating to the powertrain;
identifying (205) system requirements of the fluid control system;
obtaining (207) technical information (t1, t2, ..., tn) relating to a plurality of potential replacement components for the powertrain from a database (150);
digitally evaluating (208) the use of each one of the potential replacement components within the powertrain by using the digital twin model in combination with the obtained technical information and the identified system requirements;
selecting (209) the at least one replacement component from the plurality of potential replacement components based on the digital evaluation.

2. The method of claim 1, wherein the powertrain operational data comprises one or more of: load data of the at least one electric motor, average load on the at least one electric motor, speed data of the at least one electric motor, average speed of the at least one electric motor, long term peak output power of the at least one electric motor, short term peak output power of the at least one electric motor, and/or operating time of the at least one electric motor.

3. The method of claim 1 or 2, wherein the identifying (205) comprises analysing the powertrain operational data.

4. The method of any one of the preceding claims, further comprising:
receiving (202) sensor data relating to one or more of pressure, flow rate, density, and/or viscosity of fluid within the fluid control system,
wherein the identifying (205) is based on the sensor data.

5. The method of any one of the preceding claims, further comprising:
receiving (203) information relating to flow control mechanisms within the fluid flow system,
wherein the digital evaluating (208) is based on at least the received information relating to the flow control mechanisms.

6. The method of any one of the preceding claims, wherein the digital evaluating (208) comprises, for each potential replacement component:
estimating (208a) at least one powertrain characteristic associated with using the potential replacement component within the powertrain,
assessing (208b) whether the estimated at least one powertrain characteristic fulfils at least one preset selection criterion,
wherein the selecting (209) is based on the assessed at least one selection criterion.

7. The method of any one of the preceding claims, wherein the digital evaluating (208) comprises, for each potential replacement component:
estimating an energy efficiency associated with using the potential replacement component within the powertrain,
wherein the selecting (209) is based on the estimated energy efficiency.

8. The method of any one of the preceding claims, further comprising:
identifying (206) a component of the powertrain to be replaced or complemented by the at least one replacement component.

9. The method of claim 8, wherein the component to be replaced or complemented is an electric motor configured to run at a fixed speed.

10. The method of claim 9, wherein the identifying (206) of the component to be replaced or complemented comprises:
selecting (206a) a first electric motor of the powertrain;
comparing (206b) an average output power of the first electric motor to a nominal output power of the first electric motor to obtain a first comparison result;
if the first comparison result fulfils a preset first criterion, identifying (206c) the first electric motor as the component to be replaced or complemented.

11. The method of any one of the preceding claims, wherein the plurality of potential replacement components comprises at least one variable speed drive.

12. The method of any one of the preceding claims, wherein the receiving of the powertrain operational data comprises obtaining measurement data over a time period representative for the fluid control system.

13. A control unit (1) comprising processing circuitry (510) configured to perform the method of any one of claims 1-12.

14. A computer program (730) comprising computer code which, when run on processing circuitry (510) of a control unit (1), causes the control unit (1) to perform the method of any one of claims 1-12.

15. A computer program product (720) comprising a computer program of claim 14, and a computer readable storage medium (740) on which the computer program (730) is stored.
